# EUROPEAN PATENT APPLICATION

(11) **EP 4 527 575 A1**
(43) Date of publication of application: **26.03.2025**
(21) Application number: 23857671.4
(22) Date of filing: 21.08.2023
(51) Int. Cl.: B26D 1/00, B26D 1/08, B26D 7/08, H01M 10/04, H01M 50/406, B65H 35/06

(54) **KNIFE AND SECONDARY BATTERY MANUFACTURING DEVICE INCLUDING SAME**

(30) Priority: 23.08.2022 KR 20220105363; 04.08.2023 KR 20230102321; 04.08.2023 KR 20230102322
(71) Applicant: LG Energy Solution, Ltd., Seoul 07335 (KR)
(72) Inventor: CHUNG, Joo Young, Daejeon 34122 (KR); KIM, Seung Il, Daejeon 34122 (KR)
(74) Representative: Goddar, Heinz J.
(86) International application number: PCT/KR2023/012332
(87) International publication number: WO 2024/043639

(57) **Abstract**

A knife according to one embodiment of the present disclosure includes a blade, and also includes a first surface and a second surface extending at a predetermined angle toward a first direction, which is the cutting direction, and a third surface extending toward a second direction perpendicular to the first direction, wherein one end of the first surface and one end of the second surface form a vertex which is the blade while making contact with each other, and wherein one end and the other end of the third surface make contact with the other end of the first surface and the other end of the second surface, respectively.

## Description

### [TECHNICAL FIELD]

### Cross Citation with Related Application(s)

This application claims the benefit of Korean Patent Application No. 10-2022-0105363 filed on August 23, 2022, Korean Patent Application No. 10-2023-0102321 filed on August 4, 2023 and Korean Patent Application No. 10-2023-0102322 filed on August 4, 2023 in the Korean Intellectual Property Office, the disclosures of which are incorporated herein by reference in their entirety.

The present disclosure relates to a secondary battery manufacturing device, and more particularly, to a secondary battery manufacturing device that can ensure battery cell sealing quality while reducing pouch sealing time.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Typically, the demand for lithium secondary batteries such as lithium-ion batteries and lithium-ion polymer batteries, having advantages such as high energy density, discharge voltage, output stability, and the like is very high.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type electrode assembly in which long sheet type positive electrodes and long sheet type negative electrodes are wound with a separator being interposed therebetween, a stacked (laminated) type electrode assembly in which pluralities of positive electrodes and negative electrodes, cut into predetermined unit sizes, are sequentially stacked with separators being interposed therebetween, or the like. Among them, in order to manufacture a stacked (laminated) type electrode assembly, it is first necessary to cut sheet-shaped positive electrodes and negative electrodes.

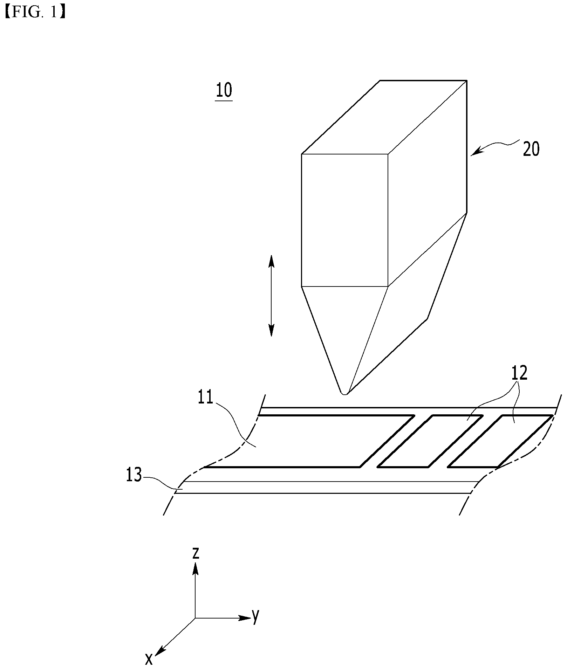

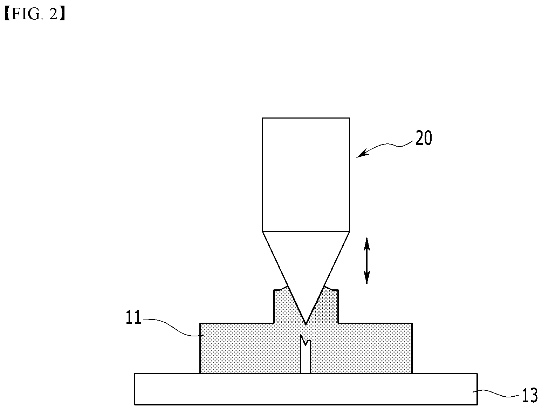

FIG. 1 is a diagram showing a conventional secondary battery manufacturing device. FIG. 2 is a diagram showing a state in which a secondary battery material is adhered when cutting a sheet in a conventional secondary battery manufacturing device.

Referring to FIGS. 1 and 2, a conventional secondary battery manufacturing device 10 can cut a sheet 11 by a cutting member 20. The sheet 11 may include an electrode sheet or a separator sheet.

Specifically, the cutting member 20 can cut the sheet 11 moving in the second direction (x-axis direction) while moving in the first direction (z-axis direction and -z-axis direction).

However, when the sheet 11 is repeatedly cut, heat is generated in the cutting member 20 due to friction or the like, and scattering matters or the like of the cut sheet 11 may be adhered. More specifically, the scattering matters, or the like are adhered while moving upward in the direction of the inclined surface of the blade in a state of being in contact with the blade of the cutting member 20. Therefore, the cut surface of the cut sheet 11 may not be smooth due to scattering matters or the like of the sheet adhered to the cutting member 20.

Further, if the electrode sheet 11 is repeatedly cut, a blade of the cutting member 20 may become blunt. If the electrode sheet 11 is cut with a cutting member 20 having a blunt blade, the cut surface of the cut electrode or separator 12 may not be smooth.

Therefore, there is a problem that scattering matters or the like of the sheet are adhered to the cutting member 20, or the blade of the cutting member 20 becomes blunt, which may cause a defect in quality of the electrode. Therefore, attempts to reduce the occurrence of problems such as described above are continuing.

### [DETAILED DESCRIPTION OF THE INVENTION]

### [Technical Problem]

It is an object of the present disclosure to provide a secondary battery manufacturing device that improves the efficiency of the secondary battery manufacturing process and manufactures secondary batteries with improved safety.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a knife comprising a blade, the knife comprising: a first surface and a second surface extending at a predetermined angle toward a first direction, which is the cutting direction, and a third surface extending toward a second direction perpendicular to the first direction, wherein one end of the first surface and one end of the second surface form a vertex which is the blade while making contact with each other, and wherein one end and the other end of the third surface make contact with the other end of the first surface and the other end of the second surface, respectively.

The first surface and the second surface may be provided with a protrusion part which is a protruding area.

The protrusion part comprises a protrusion starting part, which is an area where the protrusion part starts based on the vertex, and the length from the vertex to the protrusion starting part may be shorter than the height of the sheet.

The knife according to another embodiment of the present disclosure may further comprise a recessed part which is an area that is dug to be recessed from the first surface and the second surface.

The recessed part comprises a recess starting part which is an area where the recessed part starts based on the vertex, and the length from the vertex to the recess starting part may be shorter than the height of the sheet.

A radius of the recessed part may be 0.01 mm or more.

The knife may further comprise a protrusion part which is an area protruding from the first surface and the second surface, and a recessed part which is an area dug to be recessed from the first surface and the second surface.

An angle of the vertex may be 120 degrees or less.

The knife may be cermet.

According to yet another embodiment of the present disclosure, there is provided a secondary battery manufacturing device comprising the knife.

### [Advantageous Effects]

According to embodiments, scattering matters generated when cutting secondary battery materials do not adhere to a cutting member, thereby being able to improve the quality of the electrode and improve the safety of the secondary battery.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a diagram showing a conventional secondary battery manufacturing device;
FIG. 2 is a diagram showing a state in which a secondary battery material is adhered when cutting a sheet in a conventional secondary battery manufacturing device;
FIG. 3 is a perspective view showing a secondary battery manufacturing device according to an embodiment of the present disclosure;
FIG. 4 is a view of the cutting member and vibrator of FIG. 3 of the present disclosure viewed from a third direction;
FIG. 5 is a flowchart showing the process of recognizing whether or not there is a defect in the secondary battery;
FIG. 6(a) is a flowchart showing a process in which a user recognizes whether or not there is a defect in the secondary battery; and FIG. 6(b) is a flowchart showing the process in which the secondary battery manufacturing system recognizes whether or not there is a defect in the secondary battery;
FIG. 7 is a diagram showing a knife according to a modification of the present disclosure;
FIG. 8 is a diagram showing the degree of adhesion of the secondary battery material depending on the position where the protrusion part of FIG. 7 is provided;
FIG. 9 is a diagram showing a knife according to another modification of the present disclosure;
FIG. 10 is a diagram showing the degree of adhesion of the secondary battery material depending on the position where a recessed part of FIG. 9 is provided;
FIG. 11 is a diagram showing a knife according to another modification of the present disclosure;
FIG. 12 is a perspective view showing a secondary battery manufacturing device according to another embodiment of the present disclosure; and
FIG. 13 is a diagram showing a modification of the substrate of FIG. 12.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

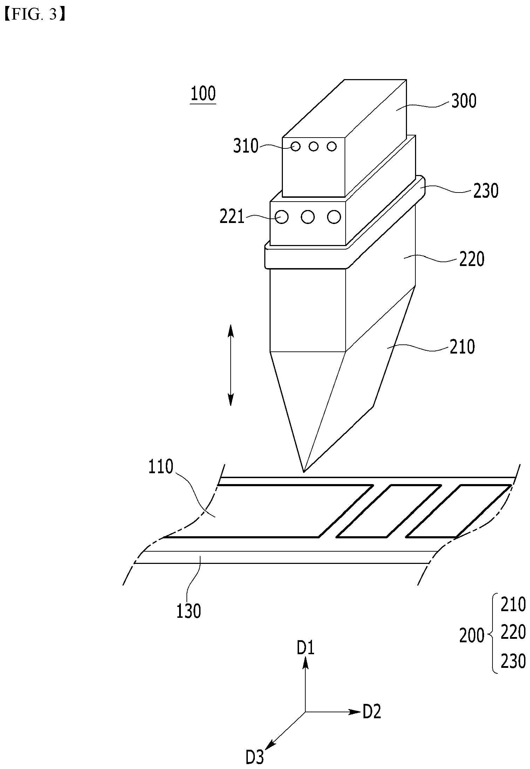

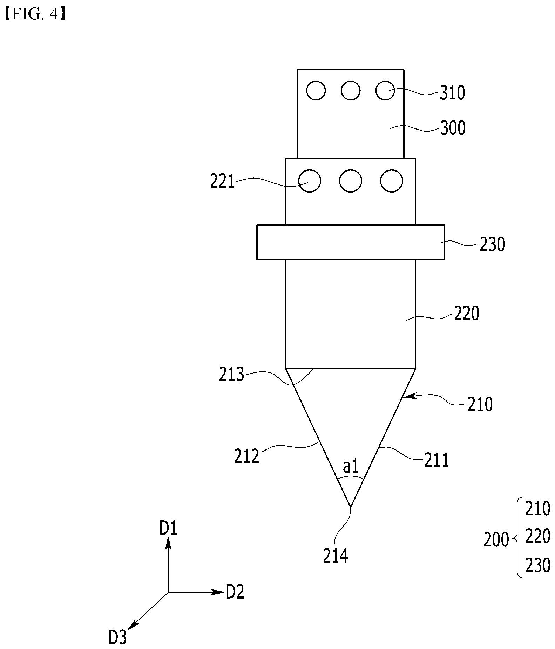

FIG. 3 is a perspective view showing a secondary battery manufacturing device according to an embodiment of the present disclosure. FIG. 4 is a view of the cutting member and vibrator of FIG. 3 of the present disclosure viewed from a third direction.

Referring to FIG. 3, the secondary battery manufacturing device 100 according to an embodiment of the present disclosure includes a substrate 130, a cutting member 200, and a vibrator 300.

The substrate 130 may be a flat plate. A sheet 110 may be located on one surface of the substrate 130. The sheet 110 may include a secondary battery material. As an example, the sheet 110 may be an electrode sheet or a separator sheet.

The substrate 130 may move in the second direction D2, and the sheet 110 may also move along with the movement of the substrate 130. Here, the second direction D2 may be a direction parallel to the substrate 130.

The cutting member 200 may make contact with the sheet 110 while moving in the first direction D1. The first direction D1 may be a direction perpendicular to the substrate 130. In this figure, the first direction D1 is shown as one direction in the coordinate system, which includes not only one direction in the coordinate system but also a direction opposite thereto, and the second direction D2 and the third direction D3 will be understood similarly.

The cutting member 200 may cut the sheet 110 while making contact with the sheet 110. At this time, the sheet 110 may be cut in the third direction D3.

The cutting member 200 can cut the sheet 110 using ultrasonic waves. Specifically, the cutting member 200 may receive transmission of ultrasonic waves generated from the vibrator 300. The vibrator 300 may be fixed while making contact with the cutting member 200, and can generate ultrasonic vibration. That is, the ultrasonic vibration generated from the vibrator 300 is transmitted to the cutting member 200, and the cutting member 200 transmits the transmitted ultrasonic vibration to the sheet 110, so that the sheet 110 can be cut.

Next, the cutting member 200 and the vibrator 300 according to an embodiment of the present disclosure will be described in more detail with reference to FIG. 4.

Specifically, the cutting member 200 may include a knife 210, a support part 220, and a clamp 230.

The knife 210 can cut the sheet 110. The knife 210 can cut the sheet 110 through ultrasonic vibration. The knife 210 may be provided with a blade at one end, wherein the blade may cut the sheet 110 while making contact with the sheet 110.

The knife 210 may be made of cermet. Because the knife 210 is made of cermet, the frictional force between the knife 210 and the secondary battery material during cutting can be minimized.

The knife 210 may include a first surface 211, a second surface 212, and a third surface 213.

The first surface 211 and the second surface 212 of the knife 210 may be surfaces extending at a predetermined angle toward the first direction D1, respectively. Here, the first direction D1 is the direction in which the knife 210 moves, which means the direction in which the sheet 110 is cut. At this time, one end of the first surface 211 and one end of the second surface 212 may form a vertex 214 while making contact with each other, wherein the vertex 214 may be a blade.

The first surface 211 and the second surface 212 may form a certain angle while respective one ends make contact with each other, wherein the angle may be defined as the first angle a1. That is, the angle at the vertex 214 may be a first angle a1. At this time, the first angle a1 may be 120 degrees or less.

Specifically, when the first angle a1 is 120 degrees or less, the cutting quality of the secondary battery material can be ensured. When the first angle a1 exceeds 120 degrees, the cutting is not performed properly due to problems such as the first surface 211 or the second surface 212 of the knife 210 making contact with the sheet 110, which may affect the quality of the electrode.

The third surface 213 may be a surface extending in the second direction D2. Here, the second direction D2 is a direction perpendicular to the direction in which the knife 210 moves, and means a direction perpendicular to the first direction. One end and the other end of the third surface 213 may be located while making contact with the other end of the first surface 211 and the other end of the second surface 212, respectively. The third surface 213 may be fixedly located while making contact with one surface of the support part 220. Therefore, the knife 210 may be mounted and fixed to the support part 220.

However, the shape and direction of the first surface 211, second surface 212, and third surface 213 of the knife 210 are not limited to those described above, and any shape can be used as long as it can cut the sheet 110 while maintaining electrode quality.

A clamp 230 may be provided on the outer surface of the support part 220.

The clamp 230 may be provided so as to surround the outer surface of the support part 220. That is, the clamp 230 can move in a state of being coupled with the support part 220. Specifically, the clamp 230 is connected to an actuator, and can move in the first direction D1 in accordance with actuator control. Thereby, the support part 220 in contact with the clamp 230, and the knife 210 fixed to the support part 220 may be moved in the first direction D1 so as to correspond to the movement of the clamp 230. That is, the knife 210 can cut the sheet 110 moving in the second direction D2 while being moved in the first direction D1 by the clamp 230.

As described above, when cutting the sheet 110 using ultrasonic vibration, the cut surface of the sheet 110 can be cut more cleanly than when cutting the sheet 110 with a general knife.

The vibrator 300 may generate ultrasonic vibration, and transmit the ultrasonic vibration to the cutting member 200. Specifically, the ultrasonic vibration generated by the vibrator 300 is transmitted to the support part 220, and the ultrasonic vibration transmitted to the support part 220 is transmitted to the knife 210, whereby the sheet 110 can be cut.

The vibrator 300 may be fixedly located while making contact with one surface of the support part 220. Specifically, the vibrator 300 may be fixedly located on one surface of the support part 220 that faces one surface of the support part 220 on which the knife 210 is located.

The vibrator 300 receives transmission of constant power from an external power source and can generate ultrasonic waves. However, when cutting the sheet 110, if the sheet 110 is not cut properly due to occurrence of any defective cutting quality or the like, resonance may be generated.

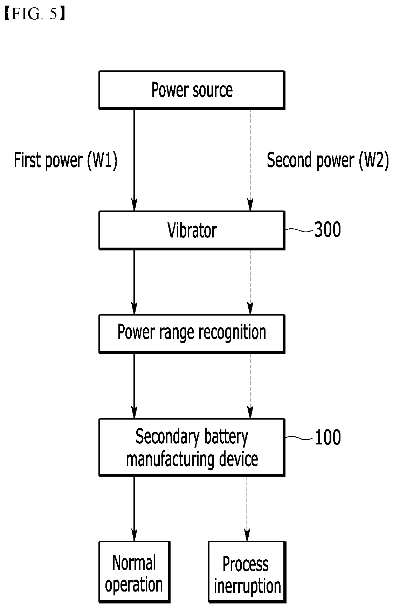

When resonance is generated, the power applied to the vibrator 300 may increase to a certain value or higher, which may mean a defect in the cutting quality of the sheet 110. In the above case, the user/manager recognizes changes in the power range applied to the vibrator 300 and can confirm a defect in the cutting quality, but the secondary battery manufacturing device 100 of the present disclosure may include a secondary battery manufacturing system that recognizes the power value applied to the vibrator 300, and thereby determines whether or not the cutting quality of the sheet 110 is normal or defective. This will be explained in more detail later in FIG. 5.

In summary, the user can determine the presence of a defect in the cutting quality of the sheet 110 through changes in the power range applied to the vibrator 300, or a power sensor electrically connected to the power source is provided to recognize the power range applied to the vibrator 300, thereby being able to determine the presence of a defect in the cutting quality of the sheet 110. Therefore, determining the cutting quality of the sheet based on the power range applied to the vibrator 300 can improve the accuracy of defect selection and improve process efficiency and electrode quality as compared to when determining the cutting quality of sheets using cameras, vision sensors, or the like in a conventional case.

Referring again to FIG. 4, the support part 220 and the vibrator 300 may include a hole, respectively. The support part 220 may include a first hole 221, and the vibrator 300 may include a second hole 310. The first hole 221 is a hole that passes through the support part 220, and the second hole 310 is a hole that passes through the vibrator 300. The first hole 221 and the second hole 310 can be formed in at least one or more numbers, respectively.

Specifically, the first hole 221 is shown as passing through the support part 220 in the third direction D3, but is not limited thereto, and the first hole 221 may pass through the support part 220 in the second direction D2. Similarly to the first hole 221, the second hole 310 is also shown as passing through the vibrator 300 in the third direction D3, but is not limited thereto, and the second hole 310 may pass through the vibrator 300 in the second direction D2.

The first hole 221 and the second hole 310 may play a role of a flow path. This is because fluid such as air can move through the first hole 221 and the second hole 310. Therefore, when heat is generated in the cutting member 200 and the vibrator 300 due to the continuously progressing cutting process, air cooling can progress through the first hole 221 and the second hole 310, thereby cooling the heat generated in the cutting member 200 and the vibrator 300. This prevents the heat generated by the vibrator 300 from being transmitted to the support part 220 and the knife 210, thereby preventing the secondary battery material from adhering to the knife 210 due to heat as much as possible when cutting the sheet 110.

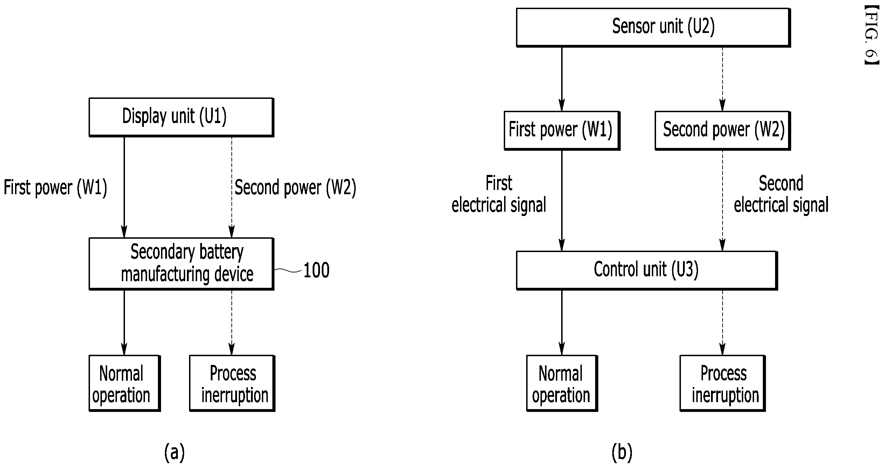

FIG. 5 is a flowchart showing the process of recognizing whether or not there is a defect in the secondary battery. FIG. 6(a) is a flowchart showing a process in which a user recognizes whether or not there is a defect in the secondary battery, and FIG. 6(b) is a flowchart showing the process in which the secondary battery manufacturing system recognizes whether or not there is a defect in the secondary battery.

Referring to FIGS. 5 and 6, in the secondary battery manufacturing device 100 according to an embodiment of the present disclosure, it is possible to determine the presence of a defect in the sheet in accordance with the power range applied to the vibrator 300.

Specifically, if the sheet is not properly cut by the secondary battery manufacturing device 100, resonance may be generated, and when resonance is generated, the power applied to the vibrator 300 may be greater than or equal to a preset level. For example, if the power applied to the vibrator 300 during normal cutting is a first power W1, the power applied to the vibrator 300 when the cut sheet 110 is defective may be referred to as a second power W2. At this time, the first power W1 and the second power W2 may have different values.

Therefore, when the second power W2 is applied to the vibrator 300, the user or the secondary battery manufacturing system can recognize an abnormality in the power range and take measures accordingly. More details about recognizing this power range will be given in FIG. 6.

Referring to FIG. 6(a), a user or a manager can take appropriate measures in accordance with the power range applied to the vibrator 300.

More specifically, the secondary battery manufacturing device 100 according to one embodiment may include a display unit U1. The display unit U1 is configured to be electrically connected to the power source P, and may be configured to display the power range applied to the vibrator 300 from the power source P. The display unit U1 may include a component for displaying the power range, and may include a component such as a panel, for example. Therefore, the user can recognize the power range currently being applied to the secondary battery manufacturing device 100 via the display unit U1.

Therefore, when the power range displayed on the display unit U1 is the first power W1, the user recognizes that the secondary battery manufacturing device 100 is operating normally, and can continuously allow the secondary battery manufacturing device 100 to cut the sheet 110.

On the other hand, when the power range displayed on the display unit U1 is the second power W2, the user recognizes that resonance is currently generated and the sheet 110 is not properly cut, thereby causing a defect, and can interrupt the secondary battery manufacturing process.

Referring to FIG. 6(b), the secondary battery manufacturing device 100 according to another embodiment can be controlled by a secondary battery manufacturing system.

The secondary battery manufacturing system can include a sensor unit U2 and a control unit U3. Both the sensor unit U2 and the control unit U3 may be configured to be electrically connected to the power source P.

The sensor unit U2 can recognize the power range applied to the vibrator 300, and transmit an electrical signal in accordance with the range of power value to the control unit U3. The control unit U3 may receive transmission of an electrical signal from the sensor unit U2, and thereby control the operation of the secondary battery manufacturing device 100. That is, the control unit U3 can control operation of the cutting member based on the electrical signal transmitted from the sensor unit U2.

Specifically, when the power value applied to the vibrator 300 is the first power W1, the sensor unit U2 can recognize this and transmit the first electrical signal to the control unit U3. In this case, the control unit U3 can control the secondary battery manufacturing device 100 to continue normal operation without interrupting the operation. That is, the control unit U3 can control the cutting member to continue normal operation without interrupting the operation.

On the other hand, when the power value applied to the vibrator 300 is the second power W2, the sensor unit U2 can recognize this and transmit the second electrical signal to the control unit U3. In this case, the control unit U3 may interrupt operation of the secondary battery manufacturing device 100. That is, the control unit U3 can interrupt the operation of the cutting member. Therefore, when the operation of the secondary battery manufacturing device 100 is interrupted by the control unit U3, a user or a manager can determine the presence of a defect in the sheet, and take measures, such as replacing the knife, so as to enable normal cutting again.

To explain briefly, the sensor unit U2 recognizes the power range applied to the vibrator 300, and the control unit U3 can control the secondary battery manufacturing device 100 in accordance with the power range.

When controlling the secondary battery manufacturing device 100 in accordance with the secondary battery manufacturing system, the secondary battery manufacturing device 100 is systematically controlled and thus, the user directly recognizes the power range through the display unit U1, which makes it more convenient for the user or manager than when maintaining or interrupting the operation of the secondary battery manufacturing device 100. Further, in the manufacturing process, there is no need for the user or manager to continuously monitor the power range, which can reduce manufacturing costs such as labor costs.

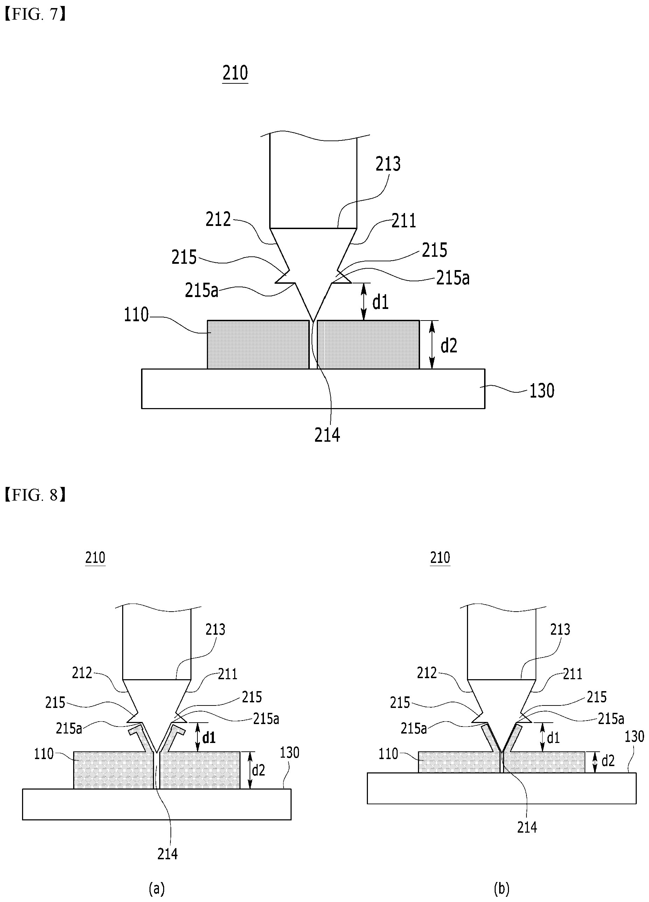

FIG. 7 is a diagram showing a knife according to a modification of the present disclosure. FIG. 8 is a diagram showing the degree of adhesion of the secondary battery material depending on the position where the protrusion part of FIG. 7 is provided. FIG. 8(a) is a diagram showing the degree of adhesion of the secondary battery material when the first length is shorter than the second length, and FIG. 8(b) is a diagram showing the degree of adhesion of the secondary battery material when the first length is longer than the second length.

The knife described in FIGS. 7 and 8 is a modification of an embodiment of the present disclosure disclosed in FIGS. 3 and 4, and detailed descriptions of the same configurations as those described above will be omitted.

Referring to FIGS. 7 and 8, the knife 210 according to a modification of the present disclosure may include a protrusion part 215.

The protrusion part 215 may be located on the side surface of the knife 210. Specifically, the protrusion part 215 may be located on the first surface 211 and the second surface 212 of the knife 210, respectively. The protrusion part 215 may be an area protruding from the first surface 211 and the second surface 212.

The protrusion part 215 may be a structure that allows the secondary battery material to detach from the knife 210 in the shortest time after cutting the sheet 110 with the knife 210. That is, when cutting the sheet 110 with the knife 210 including the protrusion part 215, the secondary battery material adhered to the knife 210 may detach from the knife 210 while contacting the protrusion part 215. Therefore, due to the protrusion part 215, the contact time between the secondary battery material and the knife 210 can be shortened. Therefore, even if the secondary battery material is adhered to the knife 210 due to frictional heat generated during cutting, because of the protrusion part 215, the secondary battery material does not adhere as it moves up along the first surface 211 and second surface 212 of the knife 210, and can detach from the knife 210 as quickly as possible.

More specifically, the secondary battery material may detach from the knife 210 based on the protrusion starting part 215a. The protrusion starting part 215a may refer to an area where the protrusion part 215 starts based on the vertex 214 where the first surface 211 and the second surface 212 make contact with each other.

Referring to FIG. 8, the length from the vertex 214 to the protrusion starting part 215a may be the first length d1, and the height of the sheet 110 may be the second length d2. At this time, the first length d1 may be shorter than the second length d2.

Specifically, referring to FIG. 8(a), when the first length d1 is shorter than the second length d2, the protrusion part 215 may have a height lower than the second length d2, and may be located on the first surface 211 and the second surface 212. In this case, even if the secondary battery material adheres to the knife 210 due to frictional heat when cutting the sheet 110, the adhered secondary battery material no longer travels up the first surface 211 and second surface 212 due to the projections part 215, but can detach from the knife 210.

On the other hand, referring to FIG. 8(b), when the first length d1 is longer than the second length d2, the protrusion part 215 has a height higher than the second length d2, and may be located on the first surface 211 and the second surface 212. In this case, when cutting the sheet 110, the secondary battery material does not detach after being adhered the knife 210 due to frictional heat, but may remain adhered on the knife 210 at a certain height or higher. Therefore, even though the protrusion part 215 is provided, the possibility of causing a defect in the cutting quality of the sheet 110 may be high.

That is, for the above reasons, it is preferable that the first length d1 is shorter than the second length d2.

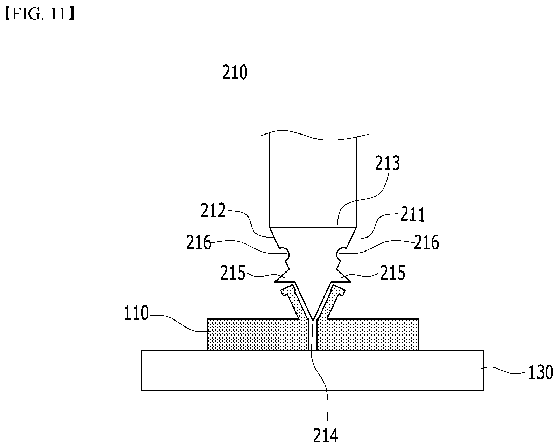

In the knife 210 shown in FIGS. 7 and 8, the cutting load is concentrated on the protrusion part 215, so the knife 210 needs to be designed so that the life of the blade is not shortened. Further, in order to keep the ultrasonic amplitude transmitted to the knife 210 at the same state, it is necessary to reduce the mass of other parts of the knife 210 by the increased mass due to the protrusion part 215. For example, the total mass of the knife 210 excluding the protrusion part 215 may be reduced by the mass of the protrusion part 215, or the knife 210 may be designed to configure a recessed part 216 together with the protrusion part 215 as shown in FIG. 11, which will be described later. That is, even if the knife 210 is provided with the protrusion part 215, the total mass of the knife 210 must be equal to the total mass of the knife 210 that is not provided with the protrusion part 215.

In this figure, the protrusion part 215 is shown as sharply protruding in a triangular shape, but the shape is not limited thereto, and any shape can be used as long as it is of a protruding shape.

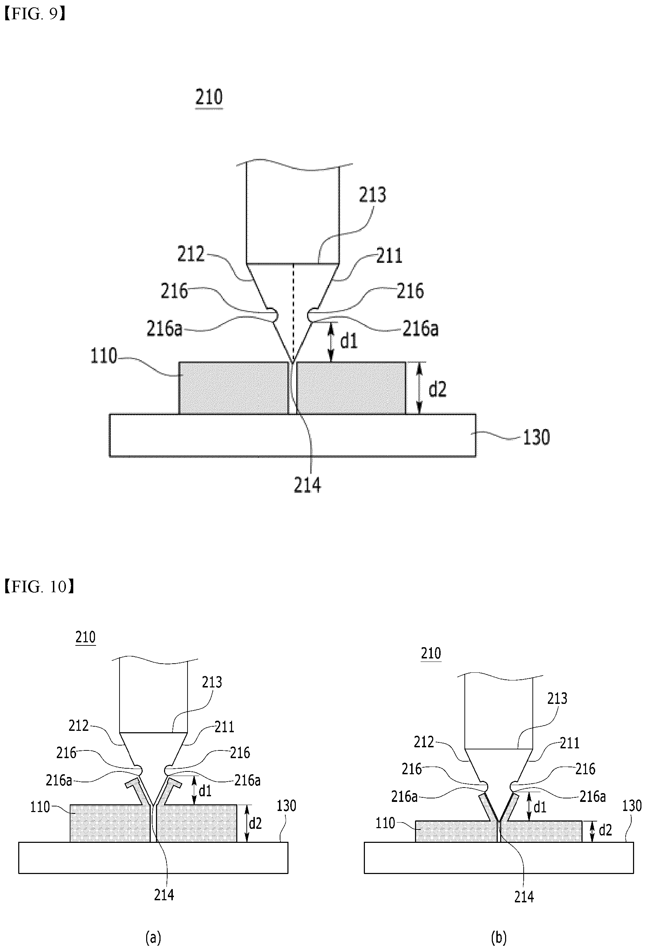

FIG. 9 is a diagram showing a knife according to another modification of the present disclosure. FIG. 10 is a diagram showing the degree of adhesion of the secondary battery material depending on the position where a recessed part of FIG. 9 is provided. FIG. 10(a) is a diagram showing the degree of adhesion of the secondary battery material when the first length is shorter than the second length, and FIG. 10(b) is a diagram showing the degree of adhesion of the secondary battery material when the first length is longer than the second length.

The knife illustrated in FIGS. 9 and 10 is a modification of an embodiment of the present disclosure disclosed in FIGS. 3 and 4, and detailed descriptions of the same configurations as those described above will be omitted.

Referring to FIGS. 9 and 10, a knife 210 according to another modification of the present disclosure may include a recessed part 216.

The recessed part 216 may be located on the side surface of the knife 210. Specifically, the recessed part 216 may be located on the first surface 211 and the second surface 212 of the knife 210, respectively. The recessed part 216 may be an area that is dug to be recessed in the first surface 211 and the second surface 212.

The recessed part 216 may be a structure that allows the secondary battery material to detach from the knife 210 within the shortest time after cutting the sheet 110 with the knife 210. That is, when cutting the sheet 110 with the knife 210 including the recessed part 216, the secondary battery material may detach from the knife 210 while making contact with the recessed part 216. Therefore, due to the recessed part 216, the contact time between the secondary battery material and the knife 210 can be shortened. Therefore, even if the secondary battery material is adhered to the knife 210 due to frictional heat generated during cutting, because of the recessed part 216, the secondary battery material is not adhered while ascending along the first surface 211 and second surface 212 of the knife 210, and can detach from the knife 210 as quickly as possible.

At this time, the radius of the recessed part 216 may be 0.01 mm or more. If the radius of the recessed part 216 is smaller than 0.01 mm, the recessed part 216 is not recognized as an irregularity formed on the knife 210, and thus, the secondary battery material can also be adhered to an area where the recessed part 216 is formed. Therefore, it is preferable that the radius of the recessed part 216 is larger than 0.01 mm. Nevertheless, if the radius of the recessed part 216 is 0.01 mm or more, the recessed part 216 may not always be formed. As an example, the length of the radius of the recessed part 216 should be smaller than the distance between a straight line (shown as a dotted line) extending perpendicular to the third surface 213 from the vertex 214 and the first surface 211 or second surface 212 on which the recessed part 216 is formed.

The secondary battery material may detach from the knife 210 based on the recess starting part 216a. The recess starting part 216a may refer to an area where the recessed part 216 starts based on the vertex 214 where the first surface 211 and the second surface 212 make contact with each other. At this time, the length from the vertex 214 to the recess starting part 216a may be the first length d1, and the height of the sheet 110 may be the second length d2.

More specifically, referring to FIG. 10(a), when the first length d1 is shorter than the second length d2, the recessed part 216 may have a height lower than the second length d2 to be located on the first surface 211 and the second surface 212. In this case, even if the secondary battery material adheres to the knife 210 due to frictional heat when cutting the sheet 110, because of the recessed part 216, the adhered secondary battery material no longer travel up the first surface 211 and the second surface 212 and may detach from the knife 210.

On the other hand, referring to FIG. 10(b), when the first length d1 is longer than the second length d2, the recessed part 216 has a height higher than the second length d2 and is located on the first surface 211 and the second surface 212. In this case, when cutting the sheet 110, the secondary battery material does not detach after being adhered on the knife 210 due to frictional heat, but may remain adhered on the knife 210 at a certain height or higher. Therefore, even though the recessed part 216 is provided, the possibility of causing a defect in the cutting quality of the sheet 110 may be high.

That is, for the above reasons, it is preferable that the first length d1 is shorter than the second length d2.

The knife 210 according to FIGS. 9 and 10 needs to be designed to prevent that the cutting load is distributed due to the configuration of the recessed part 216 and its life is shortened, such as the blade being broken. Further, in order to keep the ultrasonic amplitude transmitted to the knife 210 at the same state, it is necessary to increase the mass of other parts of the knife 210 by the amount reduced by the recessed part 216. For example, the mass of another area of the knife 210 that is not provided with the recessed part 216 may be increased, or the protrusion part 215 may be added to the knife 210 together with the recessed part 216 as shown in FIG. 11, which will be described later. That is, even if the knife 210 is provided with the recessed part 216, the total mass of the knife 210 must be equal to the total mass of the knife 210 that is not provided with the recessed part 216.

In this figure, the recessed part 216 is shown as being dug to be circularly recessed, but the shape is not limited thereto, and any shape can be used as long as it is of a shape dug to be recessed.

FIG. 11 is a diagram showing a knife according to another modification of the present disclosure.

The knife described in FIG. 11 is a modification of an embodiment of the present disclosure disclosed in FIGS. 7 to 10, and detailed descriptions of the same configurations as those described above will be omitted.

Referring to FIG. 11, a knife 210 according to another modification of the present disclosure may include a protrusion part 215 and a recessed part 216.

The protrusion part 215 and the recessed part 216 may be located on each side surface of the knife 210. Specifically, the protrusion part 215 and the recessed part 216 may be located on the first surface 211 and the second surface 212, respectively. That is, the protrusion part 215 and the recessed part 216 may be located together on each of the first surface 211 and the second surface 212.

At this time, the mass added from the protrusion part 215 may be equal to the mass reduced from the recessed part 216. Therefore, even if the protrusion part 215 is added, the recessed part 216 is located together on the knife 210. Therefore, the total mass of the knife 210 including the protrusion part 215 and the recessed part 216 may be equal to the mass of the knife 210 that is not provided with the protrusion part 215 and the recessed part 216.

Thereby, the protrusion part 215 and the recessed part 216 may be added to the knife 210 so that the cutting load may not be distributed. Rather, by applying the protrusion part 215 and the recessed part 216 to the knife 210 at the same time, the overall mass of the knife 210 may be set to be equal to that of the knife 210 that does not include the protrusion part 215 or the recessed part 216. Therefore, while the cutting load of the knife 210 is not distributed and the life of the knife 210 is not shortened, the configuration of the protrusion part 215 and the recessed part 216 prevents the secondary battery material from adhering to the knife 210, thereby being able to improve the cutting quality of the sheet 110 and the quality of the electrode.

In the present disclosure, it is shown that the protrusion part 215 is formed closer to the vertex 214 than the recessed part 216, and the recessed part 216 is formed farther away from the vertex 214 than the protrusion part 215, but is not limited thereto. As an example, it may be possible for the recessed part 216 to be formed closer to the vertex 214 than the protrusion part 215.

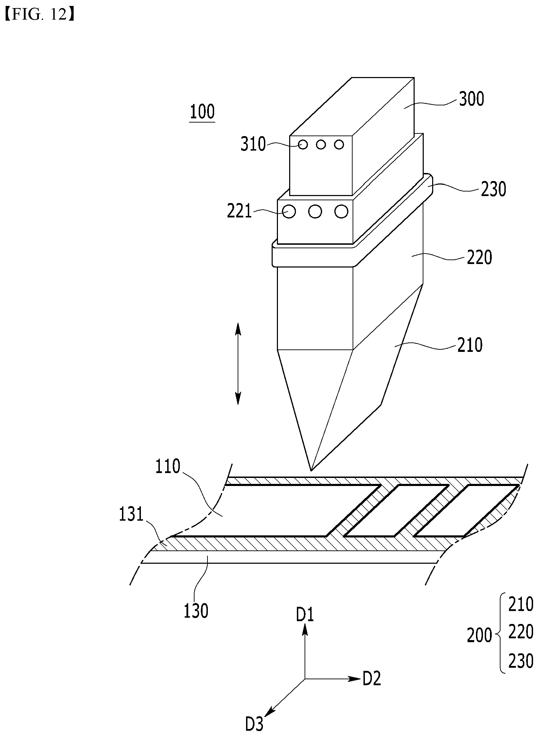

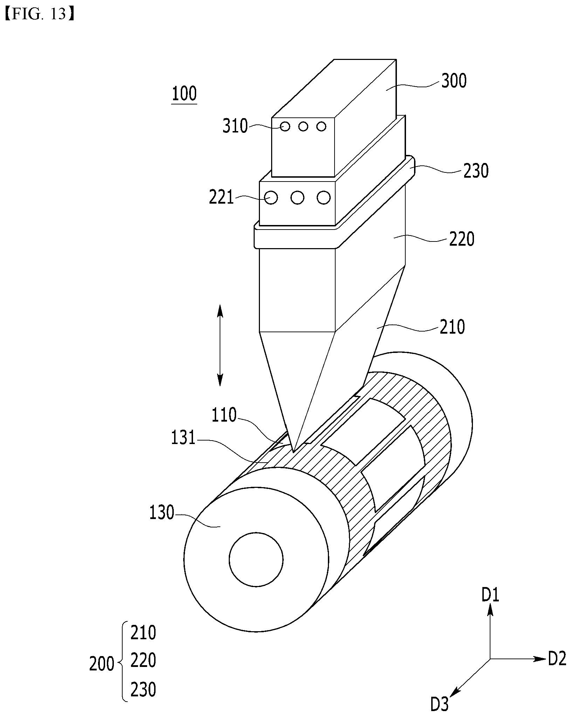

FIG. 12 is a perspective view showing a secondary battery manufacturing device according to another embodiment of the present disclosure. FIG. 13 is a diagram showing a modification of the substrate of FIG. 12.

The secondary battery manufacturing device described in FIGS. 12 and 13 is a modification of an embodiment of the present disclosure disclosed in FIGS. 3 and 4, and detailed descriptions of the same configurations as those described above will be omitted.

Referring to FIGS. 12 and 13, a secondary battery manufacturing device 100 according to another embodiment of the present disclosure includes a substrate 130, a cutting member 200, and a vibrator 300.

The substrate 130 may include a damage prevention layer 131 located on one surface of the substrate 130. In this case, the substrate 130 may have a general plate shape as shown in FIG. 12, but may also have a circular roll shape as shown in FIG. 13. However, the substrate 130 can transfer the sheet 110 while moving in one direction, regardless of its shape.

The damage prevention layer 131 may be located on one surface of the substrate 130 on which the sheet 110 is located, and may be located while facing the cutting member 200. The cutting member 200 may cut the sheet 110 while moving in the first direction D1, in which case the cutting member 200 may repeatedly contact the damage prevention layer 131.

The size of the damage prevention layer 131 may correspond to one surface of the substrate 130. Specifically, the size of the damage prevention layer 131 may be the same as or smaller than the size of one surface of the substrate 130. For example, referring to FIG. 12, the damage prevention layer 131 may be located while completely covering the substrate 130. Alternatively, as shown in FIG. 13, the damage prevention layer 131 may be located while covering only a part of one surface of the substrate 130. However, even if the damage prevention layer 131 is located only in some areas of the substrate 130, the damage prevention layer 131 must be unconditionally located in the area where the cutting member 200 contacts the substrate 130.

The knife 210 and the substrate 130 may not make contact with each other. This is because the knife 210 may be damaged if the knife 210 and the substrate 130 make contact with each other. Therefore, in order to prevent damage to the knife 210, a damage prevention layer 131 is provided on the substrate 130, and the knife 210 may contact with the damage prevention layer 131. As a result, the knife 210 is not damaged because it is not in direct contact with the substrate 130, thereby extending the life of the knife 210 and reducing equipment costs.

The damage prevention layer 131 may be coated and located on one surface of the substrate 130. Alternatively, the damage prevention layer 131 may be manufactured separately in a separate process and then fixed to one surface of the substrate 130 with an adhesive or the like.

As an example, the damage prevention layer 131 may be made of a material having a Shore hardness of 5Hs to 85H_{S}. Specifically, when the damage prevention layer 131 is made of a material with a Shore hardness of 5H_{S} or less, the secondary battery material such as the sheet 110 may not be fixed to the damage prevention layer 131. Therefore, the secondary battery material may not be cut due to the shearing force of the knife 210, which will be described later, and there may be a high possibility that it will break or detach. When the damage prevention layer 131 is made of a material with a Shore hardness of 85H_{S} or more, the knife 210 may be severely worn at the time of rubbing the damage prevention layer 131 and the knife 210. In this case, the cutting quality of the sheet 110 and the quality of the electrode may deteriorate due to foreign substances such as iron (Fe) generated from the worn knife 210.

In this case, the damage prevention layer 131 may be PVC (Polyvinyl Chloride), silicone, MC Nylon (Mono Cast Nylon), Teflon, PET (Polyethylene Terephthalate), and the like. The damage prevention layer 131 formed of the above-mentioned material does not damage the knife 210 even when vibration is transmitted from the knife 210 to the damage prevention layer 131, whereby foreign substances such as iron (Fe) are not generated, the cutting quality of the sheet 110 and the quality of the electrode can be improved.

Further, since the materials constituting the damage prevention layer 131 have a high heat distortion temperature, their shape is not deformed even when heat is applied due to the vibration of the knife 210 during cutting, thereby being able to ensure the cutting quality of secondary battery materials even at high temperatures.

As another example, the damage prevention layer 131 may be an ultimate-performance fiber with high strength and high elastic modulus. Specifically, the damage prevention layer 131 may be a material having a tensile strength of 20 g/d or more and an elastic modulus of 500 g/d or more. As an example, the damage prevention layer is a bulletproof/sword proof material, and may be p-aramid (para-aramid) or UHMWPE (Ultra High Molecular Weight Polyethylene).

As the damage prevention layer 131 is configured as described above, the damage prevention layer 131 may not be damaged or cut even when it makes contact with the knife 210 of the cutting member 200. That is, when cutting the sheet 110, the cutting member 200 may make contact with the damage prevention layer 131 several times and not contact the substrate 130. Therefore, even if the knife 210 is repeatedly driven, the substrate 130 may not be damaged. Therefore, the cutting process can proceed continuously, and process efficiency can be improved.

In addition, wear of the blade of the knife 210 can be minimized due to the damage prevention layer 131. Therefore, the sheet 110 can be cut while preventing damage to the blade of the knife 210, and thus the cutting quality of the electrode can be improved. Moreover, frequent replacement of the knife 210 can be prevented, and process costs can be reduced.

The aforementioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

- 100:: secondary battery manufacturing device
- 110:: sheet
- 130:: substrate
- 200:: cutting member
- 210:: knife
- 215:: protrusion part
- 216:: recessed part
- 220:: support part
- 221:: first hole
- 300:: vibrator
- 310:: second hole

## Claims

1. A knife comprising a blade, the knife comprising:
a first surface and a second surface extending at a predetermined angle toward a first direction, which is the cutting direction, and a third surface extending toward a second direction perpendicular to the first direction,
wherein one end of the first surface and one end of the second surface form a vertex which is the blade while making contact with each other, and
wherein one end and the other end of the third surface make contact with the other end of the first surface and the other end of the second surface, respectively.

2. The knife according to claim 1, wherein:
the first surface and the second surface are provided with a protrusion part which is a protruding area.

3. The knife according to claim 2, wherein:
the protrusion part comprises a protrusion starting part, which is an area where the protrusion part starts based on the vertex, and
a length from the vertex to the protrusion starting part is shorter than a height of a sheet.

4. The knife according to claim 1,
further comprising a recessed part which is an area that is dug to be recessed from the first surface and the second surface.

5. The knife according to claim 4, wherein:
the recessed part comprises a recess starting part which is an area where the recessed part starts based on the vertex, and
a length from the vertex to the recess starting part is shorter than a height of a sheet.

6. The knife according to claim 4, wherein:
a radius of the recessed part is 0.01 mm or more.

7. The knife according to claim 1, wherein:
further comprising a protrusion part which is an area protruding from the first surface and the second surface, and
a recessed part which is an area dug to be recessed from the first surface and the second surface.

8. The knife according to claim 1, wherein:
an angle of the vertex is 120 degrees or less.

9. The knife according to claim 1, wherein:
the knife is cermet.

10. A secondary battery manufacturing device comprising the knife according to claim 1.
